# EUROPÄISCHE PATENTSCHRIFT

(11) **EP 1 188 940 B1**
(45) Veröffentlichungstag und Bekanntmachung des Hinweises auf die Patenterteilung: **21.04.2004**
(21) Anmeldenummer: 01117976.9
(22) Anmeldetag: 24.07.2001
(51) Int. Cl.: F16C 13/00, B65G 39/12, B65G 1/02, B65G 39/02

(54) **Rolle**
Roll
Rouleau

(30) Priorität: 19.09.2000 DE 20016220 U
(43) Veröffentlichungstag der Anmeldung: 20.03.2002
(73) Patentinhaber: BITO-LAGERTECHNIK BITTMANN GmbH, D-55590 Meisenheim (DE)
(72) Erfinder: Bauer, Matthias, 55590 Meisenheim (DE)
(74) Vertreter: Hano, Christian, Dipl.-Ing.

(56) Entgegenhaltungen:
- DE-A- 4 126 938
- DE-U- 20 012 578
- DE-U- 20 016 220
- US-A- 4 054 335
- US-A- 4 490 128
- US-A- 4 654 181
- US-A- 4 762 739
- US-A- 6 105 746

## Beschreibung

Die Erfindung betrifft eine insbesondere aus Kunststoff hergestellte Rolle nach dem Oberbegriff des Patentanspruchs 1.

Gattungsgemäße Rollen werden üblicherweise in einer Reihe hintereinander in Rollenleisten gelagert, die in Durchlaufregalen angeordnet sind. Nebeneinander angeordnete Rollenleisten bilden jeweils eine Laufbahn für Lager- oder Transportbehälter.

Aus der US 4 490 128 A oder der US 6 105 746 sind jeweils Rollen bekannt, deren Rollkörper durch durchgehende Stege mit dem Achskörper verbunden sind, die sich zwischen den Stirnseiten der Rolle erstrecken. Im axialen Mittelbereich sind Rollkörper und Achskörper durch eine durchgehende Mittelwand miteinander verbunden, die senkrecht zur Mittelachse der Rolle verläuft. Durch den Achskörper geht eine normalerweise aus Stahl bestehende Achse so hindurch, daß die Achsenden von dem Achskörper vorstehen. Die Achsenden sind in Ausnehmungen der Rollenleisten gelagert.

Wenn sehr schwere Behälter unachtsam auf die Laufbahn geworfen werden, hat sich gezeigt, daß sich die Achsen verbiegen können. Ursache ist hierfür das hohe Biegemoment im axialen Mittelbereich und die Tatsache, dass die Kraft durch die Mittelwand direkt auf den Achskörper übertragen wird. Wenn die Achse verbogen ist, können sich die Rollen nicht mehr frei drehen.

Der Erfindung liegt die Aufgabe zugrunde, mit konstruktiv einfachen Mitteln und mit minimalem Materialaufwand eine Rolle zu schaffen, bei der eine Verbiegung der Achse bei starker Stoßbelastung verhindert ist.

Diese Aufgabe wird durch eine Rolle mit den Merkmalen des Patentanspruchs 1 gelöst. Vorteilhafte Weiterbildungen der erfindungsgemäßen Rolle sind Gegenstand der Patentansprüche 2 bis 4.

Durch den Ring wird das Widerstandsmoment des Rollkörpers erhöht, wobei der Rollkörper trotzdem elastisch bleibt. Die Speichen übertragen eine auf die Rolle aufgebrachte Kraft in die Nähe der Stirnseiten des Achskörpers. Hierdurch ist der Hebel zu den Achsstützpunkten gering, so daß sich die Achse auch bei hohen dynamischen Schlägen nicht durchbiegt.

Ein Ausführungsbeispiel der Erfindung wird nachstehend an Hand der Zeichnung näher erläutert. Es zeigen:
- Fig. 1: eine Stirnansicht einer Rollenleiste;
- Fig. 2: eine Seitenansicht der Rollenleiste von Fig. 1;
- Fig. 3: eine Stirnansicht einer Rolle;
- Fig. 4: den Schnitt IV-IV von Fig. 3.

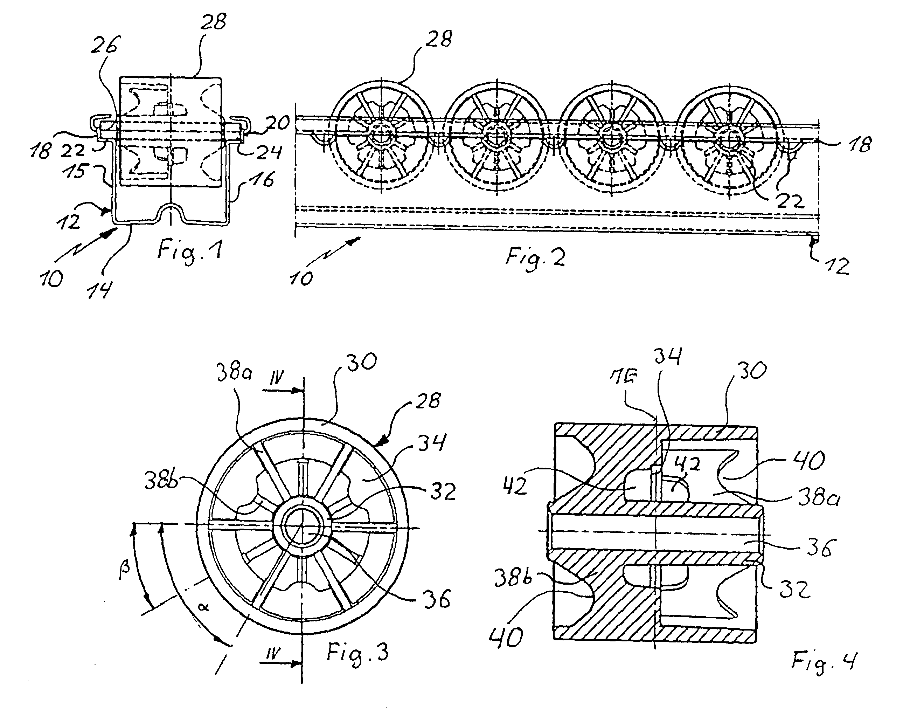

Die in Fig. 1 gezeigte Rollenleiste 10 umfaßt einen längsgestreckten, im Querschnitt im wesentlichen U-förmigen, aus Stahl geformten Profilkörper 12, mit einem im wesentlichen horizontalen Steg 14 von dem sich zwei parallele Schenkel 15, 16 nach oben erstrecken. Die Schenkel 15, 16 sind an ihren freien Enden zur Bildung eines Lagerabschnittes 18, 20 rechtwinkelig nach außen gebogen. In den Lagerabschnitten 18, 20 sind in regelmäßigem Abstand Lageraussparungen 22, 24 ausgebildet. In zwei gegenüberliegenden Lageraussparungen 22, 24 ist eine Achse 26 einer Rolle 28 mit ihren beiden Achsenden gelagert.

Wie es in Fig. 2 zu erkennen ist, sind in einer Rollenleiste 10 mehrere Rollen 28 im Abstand zueinander in einer Reihe gelagert. Die Ausbildung der Rolle 28 ist in den Fig. 3 und 4 näher gezeigt.

Die Rolle 28 weist einen zylindrischen Rollkörper 30 auf. Innerhalb des Rollkörpers 30 ist ein Achskörper 32 koaxial zu dem Rollkörper 30 im Abstand zu dessen Innenwand angeordnet. Mit dem Rollkörper 30 ist ein im Querschnitt schmaler Ring 34 verbunden, der in einer Ebene angeordnet ist, die senkrecht zur Mittelachse des Rollkörpers 30 durch die axiale Mitte des Rollkörpers 30 verläuft. Der Innenumfang des Ringes 34 ist im Abstand zum Außenumfang des Achskörpers 32 angeordnet. Durch den Achskörper 32 geht zentral eine Achsbohrung 36 zur Aufnahme der Achse 26 hindurch.

Der Rollkörper 30 und der Achskörper 32 sind durch sich radial erstreckende, in gleichmäßigem Winkelabstand α von 60° angeordnete Speichen 38a bzw. 38b miteinander verbunden. Die Speichen 38a, 38b sind eben, im wesentlichen L-förmig ausgebildet und weisen einen schmalen Querschnitt auf. Die Speichen 38a, 38b sind mit ihrem einen Ende mit einer Seitenwand des Ringes 34 und der Innenwand des Rollkörpers 30 und mit ihrem anderen Ende angrenzend an die jeweilige Stirnseite des Achskörpers 32 mit dessen Außenumfang verbunden. In der der jeweiligen Stirnseite des Achskörpers 32 zugewandten Schmalseite der Speichen 38a, 38b ist eine Einbuchtung 40 ausgebildet. In der der Mittelebene ME zugewandten Schmalseite der Speiche 38a, 38b ist angrenzend an den Außenumfang des Achskörpers 32 eine Ausnehmung 42 vorgesehen.

Wie es in Fig. 3 zu erkennen ist, sind die auf einer Seite des Ringes 34 vorgesehenen Speichen 38a gegenüber den auf der anderen Seite des Ringes 34 angeordneten Speichen 38b in einem Winkel β von 30° versetzt.

Da die auftretende Biegemomente aufgrund der durch den Ring 34 erreichten Elastizität und der geringen Entfernung der Krafteinleitungspunkte zum Lagerort sehr gering sind, ist es auch möglich auf eine Achsbohrung 36 und eine durch sie hindurchgehende Achse 26 zu verzichten. Anstatt dessen können Achsenden aus Kunstoff an die Stirseiten des Achskörpers 32 angespritzt werden, die mit der Rolle 30 ein Teil bilden.

## Patentansprüche

1. Rolle, insbesondere aus Kunstoff, mit einem zylindrischen Rollkörper (30) und einem koaxial im Abstand zur Innenwand des zylindrischen Rollkörpers (30) angeordneten Achskörper (32), an dessen Stirnseiten jeweils ein Ende einer Achse (26) koaxial vorsteht, **dadurch gekennzeichnet, dass**
- im axial mittleren Bereich des Rollkörpers (30) ein Ring (34) mit der Innenwand des Rollkörpers verbunden ist, der sich senkrecht zur Innenwand erstreckt und dessen Innenumfang im Abstand zum Außenumfang des Achskörpers (32) angeordnet ist, und
- beidseitig des Ringes (34) mehrere Speichen (38a, 38b) vorgesehen sind, deren eines Ende mit der Innenwand und der zugewandten Seitenwand des Ringes (34) und deren anderes Ende angrenzend an die entsprechende Stirnseite des Achskörpers (32) mit dem Achskörper (32) verbunden ist.

2. Rolle nach Anspruch 1, **dadurch gekennzeichnet, dass** in der der jeweiligen Stirnseite des Achskörpers (32) zugewandten Schmalseite der Speichen (38a, 38b) eine Einbuchtung 40 ausgebildet ist und in der der Mittelebene (ME) zugewandten Schmalseite der Speichen (38a, 38b) angrenzend an den Außenumfang des Achskörpers (32) eine Ausnehmung (42) vorgesehen ist.

3. Rolle nach Anspruch 1 oder 2, **dadurch gekennzeichnet, dass** die Speichen (38a, 38b) auf einer Seite des Ringes (34) in gleichmäßigem Winkelabstand (α) um den Achskörper (32) angeordnet sind.

4. Rolle nach Anspruch 2, **dadurch gekennzeichnet, dass** die Speichen (38a) auf einer Seite des Ringes (34) gegenüber den Speichen (38b) auf der anderen Seite des Ringes (34) um einen halben Winkelabstand (β) versetzt sind.

5. Rolle nach einem der vorhergehenden Ansprüche, **dadurch gekennzeichnet, dass** die Enden der Achse (26) ein Teil mit dem Achskörper (32) bilden.

## Claims

1. A roller, in particular consisting of plastics material, having a cylindrical roller body (30) and an axle casing (32) arranged coaxially at a distance from the inner wall of the cylindrical roller body (30), at the end faces of which axle casing a respective end of an axle (26) protrudes coaxially, **characterised in that**
- in the axial central zone of the roller body (30) a ring (34) is connected to the inner wall of the roller body, which ring extends perpendicularly to the inner wall and the inner circumference of which is disposed at a distance from the outer circumference of the axle casing (32), and
- on either side of the ring (34) there are provided a plurality of spokes (38a,38b), one end of which is connected to the inner wall and to the facing side wall of the ring (34), and the other end of which is connected to the axle casing (32) adjoining the corresponding end face of the axle casing (32).

2. A roller according to Claim 1, **characterised in that** an indentation (40) is formed in the narrow side of the spokes (38a,38b) nearest the respective end face of the axle casing (32) and a recess (42) is provided in the narrow side of the spokes (38a,38b) nearest the central plane (ME) and adjoining the outer circumference of the axle casing (32).

3. A roller according to Claim 1 or 2, **characterised in that** the spokes (38a,38b) are arranged on one side of the ring (34) at a uniform angular distance apart (α) around the axle casing (32).

4. A roller according to Claim 2, **characterised in that** the spokes (38a) are offset on one side of the ring (34) with respect to the spokes (38b) on the other side of the ring (34) by half an angular distance (β).

5. A roller according to any one of the preceding Claims, **characterised in that** the ends of the axle (26) form one part with the axle casing (32).

## Revendications

1. Rouleau, notamment en matière plastique, avec un corps de rouleau cylindrique (30) et un corps d'axe (32) disposé coaxialement à distance de la paroi intérieure du corps de rouleau cylindrique (30), une extrémité d'un axe (26) ressortant coaxialement sur les faces frontales respectives dudit corps d'axe (32), **caractérisé en ce que**
- un anneau (34) est relié à la paroi intérieure du corps de rouleau dans la zone axialement centrale du corps de rouleau (30), qui s'étend perpendiculairement par rapport à la paroi intérieure et son pourtour intérieur étant situé à distance du pourtour extérieur du corps d'axe (32), et **en ce que**
- plusieurs rayons (38a, 38b) sont prévus de part et d'autre de l'anneau (34), l'une des extrémités desdits rayons étant reliée à la paroi intérieure et la paroi latérale dudit anneau (34) y faisant face et l'autre extrémité desdits rayons étant reliée au corps d'axe (32) de manière adjacente à la face frontale correspondante dudit corps d'axe (32).

2. Rouleau selon la revendication 1, **caractérisé en ce qu'**est aménagé un creux (40) dans le côté étroit des rayons (38a, 38b) tourné vers la face frontale respective du corps d'axe (32) et **en ce qu'**est prévu, dans le côté étroit desdits rayons (38a, 38b) tourné vers le plan médian (ME), un évidement (42) de manière adjacente au pourtour extérieur dudit corps d'axe (32).

3. Rouleau selon la revendication 1 ou 2, **caractérisé en ce que** les rayons (38a, 38b) sont disposés à une distance angulaire (α) égale sur un côté de l'anneau (34) autour du corps d'axe (32).

4. Rouleau selon la revendication 2, **caractérisé en ce que** les rayons (38a) sur un côté de l'anneau (34) sont décalés d'une demi-distance angulaire (β) par rapport aux rayons (38b) situés de l'autre côté dudit anneau (34).

5. Rouleau selon l'une des revendications précédentes, **caractérisé en ce que** les extrémités de l'axe (26) font une pièce avec le corps d'axe (32).
